# EUROPEAN PATENT SPECIFICATION

(11) **EP 4 072 276 B1**
(45) Date of publication and mention of the grant of the patent: **21.01.2026**
(21) Application number: 20828080.0
(22) Date of filing: 11.12.2020
(51) Int. Cl.: A01J 7/02, A01J 7/04

(54) **A TEAT CLEANING DEVICE AND METHOD OF CLEANING A TEAT OF AN ANIMAL PRIOR TO MILKING**
ZITZENREINIGUNGSVORRICHTUNG UND VERFAHREN ZUM REINIGEN EINER ZITZE EINES TIERES VOR DEM MELKEN
DISPOSITIF DE NETTOYAGE DE TRAYON ET PROCÉDÉ DE NETTOYAGE D'UN TRAYON D'UN ANIMAL AVANT LA TRAITE

(30) Priority: 13.12.2019 GB 201918386
(43) Date of publication of application: 19.10.2022
(73) Proprietor: An Udder IP Company Limited, London, EC4M 9DQ (GB)
(72) Inventor: DUKE, Thomas Christopher John, Southbourne PO10 8PS (GB); DUKE, George Edward James, chester, PO20 7NY (GB)
(74) Representative: Ashton, Gareth Mark
(86) International application number: PCT/GB2020/053173
(87) International publication number: WO 2021/116690

(56) References cited:
- US-A- 5 211 132
- US-A1- 2015 059 657
- US-A1- 2016 360 723

## Description

### FIELD OF THE INVENTION

The present invention relates to a teat cleaning device, for example for cleaning the teats of a cow or other animal prior to milking.

### BACKGROUND OF THE INVENTION

The milking of an animal generally involves the application of teat cups to the teats of the animal, and the use of vacuum and/or massage to stimulate the teats and extract the milk. The teats of an animal require cleaning prior to milking, to remove any dirt or debris present on the teats so that it does not contaminate the milk.

Various teat cleaning devices are known in the art, for example WO 99/04623 discloses a device in which two counter-rotating brushes rotate about horizontal axes, and receive a teat aligned vertically between them. However, whilst each brush cleans the side of the teat that faces towards it, the other sides of the teat such as those sides facing in directions parallel to the axes of the two brushes are insufficiently cleaned.

This uneven cleaning can be remedied by manually rotating the device beneath the animal, so that all sides of the teat face towards the brushes for at least some of the time. However, this is inconvenient, it relies on the operator to correctly operate the device, and it adds to the time that it takes to clean the teats.

It is therefore an object of the invention to provide an improved teat cleaning device.

US 2016/360723 A1 discloses a hand-held applicator for cleaning a teat of a milk-producing animal, the applicator comprising a plurality of brushes that are rotated via gears. US 2015/059657 A1 discloses a hand-held washer for cleaning teats, and US 5211132 A discloses an apparatus for automatically washing teats of dairy animals.

### SUMMARY OF THE INVENTION

According to a first aspect of the invention, there is provided a teat cleaning device as defined in the appended claim 1. The teat cleaning device comprises a cavity for receiving a teat of an animal with a length of the teat aligned along a length of the cavity. The device comprises three axles, each axle having an axis of rotation that is perpendicular to the length of the cavity. Each one of the three axles forms a respective part of a path extending around the cavity, and each axle supports a brush configured to rub against the teat of the animal when the teat is received in the cavity and the axle is rotated, wherein the axes of rotation of the axles are not aligned with one another and are non-parallel to one another.

Since three brushes are provided, each brush only needs to cover at most an arc segment of 360/3 = 120 degrees around the circumference of the teat of the animal, in order for the teat to be fully cleaned. This allows for full cleaning all the way around the teat without any need to rotate the device itself, and so is much less prone to operator error and cleans the teat more quickly than known devices, which typically use only two brushes with each brush expected to cover a full 180 degrees around the surface of each teat.

Each axle is driven to rotate, and to enable effective driving of each axle, the end of one axle may be used to rotate the end of the next axle in the path around the cavity. Accordingly, the rotational force can be passed from axle to axle, with only one of the axles needing to be driven in order to cause all of the axles to rotate. Each axle rotates as a single body, so the first end rotates with a same rotation as the second end, and the rotation can be passed from one axle to the next at the ends of the axles.

The rotational force may be passed between each pair of immediately adjacent axles by toothed wheels that mesh with one another at the ends of the two axles. The toothed wheels may for example be bevel gears, to accommodate the angular offset between the immediately adjacent axles that are next to one another in the path around the cavity.

Together, the axles preferably form a closed path all the way around the cavity, with the rotational force being passed between the ends of the axles so that all axles rotate. Every axle may have both of its ends passing rotational force to both immediately adjacent axles, to reduce the rotational load to be transferred between each pair of immediately adjacent axles.

There may be only three axles, with the path being in the shape of a triangle enclosing around the cavity, and each side of the triangle defined by a respective one of the three axles. Or, there may be more than three axles, for example four axles, so that each brush only needs to cover an arc segment of 360/4 = 90 degrees around the teat. The path may be in the shape of a regular polygon, each side of the polygon defined by a respective one of the axles.

The device typically comprises a housing that supports each one of the axles in its axis of rotation, for example the housing may be formed as two separate halves with the axles being held at the interfaces between those halves so the axles can be easily accessed and replaced if needed. Preferably, the device also comprises a motor that is configured to drive one of the axles to rotate, via one or more gears and/or pulleys. An inlet into the cavity for washing and/or disinfecting liquid may also be provided, to enhance cleaning of the teat. The housing may hold a reservoir of cleaning fluid connected to the inlet.

Preferably, each brush supported by each axle comprises a plurality of paddles, each paddle being a plate that extends along the length of the axle and radially outward from the axle. Each paddle may be configured to resile against the teat in the cavity and therefore rub down an arc portion of the circumference around the teat as the corresponding axle is rotated. This resile of the paddle against the teat as the paddle rubs down the teat helps to stretch the skin of the teat and release debris held in skin folds that bristle-type brushes alone often fail to reach. The paddles may for example be made of a resilient plastics or rubber material. The paddle and the axle may be integrally formed with one another, or a separate paddle slid over each axle.

The paddles of immediately adjacent axles preferably extend from those axles at different radial angles from one another, to avoid collisions between those paddles as the axles rotate. The use of toothed wheels to pass the rotational force from axle to axle helps keep each immediately adjacent pair of axles in the correct phase of rotation relative to one another, so the paddles of those axles do not collide with one another.

Preferably, the axes of rotation of the axles are all in a single plane, so that the device cleans evenly all the way around the teat, and can be moved up and down the teat if desired to help ensure substantially the whole length of the teat is cleaned. The axes of rotation of the axles are not aligned with one another, so that each axle and associated brush provides cleaning of a distinct arc-segment of the circumference around the teat. The axes of rotation of the axles are non-parallel with one another, as is the case when three axles are used to form a triangular path around the teat.

In use, the axles all rotate so that the brushes within the cavity sweep downwards along the length of the cavity, in a direction from the root of the teat towards the tip of the teat. Then, any dirt and debris that is dislodged is swept off the end of the teat. The use of bevel gears at the ends of the axles keeps all the axles rotating in the correct direction to achieve this.

According to a second aspect of the invention, there is provided a method of cleaning a teat of an animal prior to milking the animal, as defined in the appended claim 15. The method comprises inserting the teat into the cavity of the teat cleaning device of the first aspect, with the length of the teat aligned along the length of the cavity, and activating the teat cleaning device to rotate the axles and rub debris from the teats with the brushes. The device may be activated by pushing a button on the housing, causing a motor to start to rotate and turn the axles, before or after the teat has been inserted into the cavity. Other buttons may also be provided, for example to control application of cleaning fluid to the teat.

### DETAILED DESCRIPTION

Embodiments of the invention will now be described by way of non-limiting example only and with reference to the accompanying drawings, in which:
Fig. 1 shows an exploded schematic perspective diagram of part of a teat cleaning device according to an embodiment of the invention;
Fig. 2 shows a schematic perspective diagram of an axle and brush arrangement of the device of Fig. 1;
Fig. 3 shows a plan view of the axle and brush arrangement of Fig. 2;
Fig. 4 shows a plan view of the teat cleaning device of Fig. 1; and
Fig. 5 shows a flow diagram of a method of cleaning a teat of an animal prior to milking.

The figures are not to scale, and same or similar reference signs denote same or similar features.

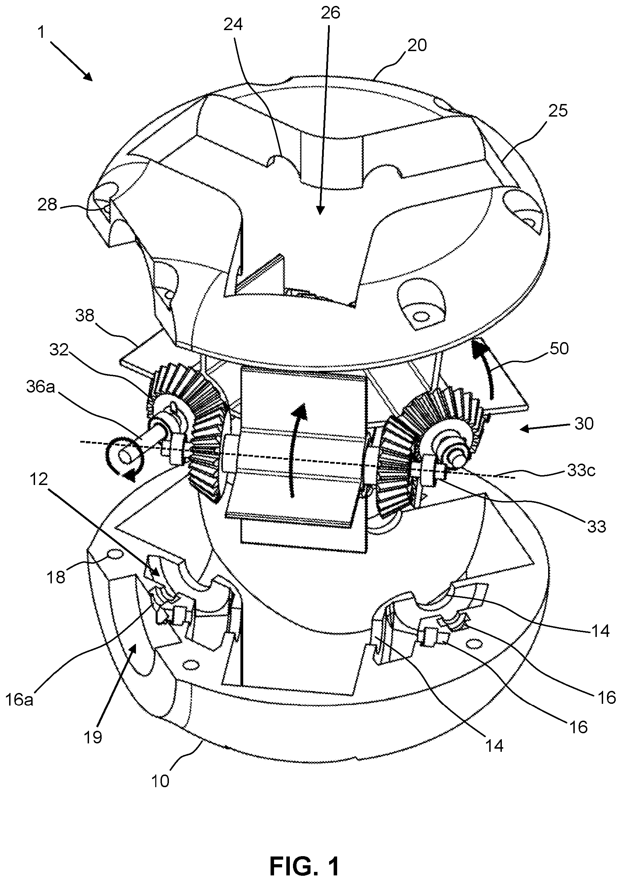

An embodiment of the invention will now be described with reference to Figs. 1 to 4. First with reference to Fig. 1, a teat cleaning device 1 comprises an upper housing 20 and a lower housing 10. The upper and lower housings are outer shells that fit together with one another, and that are held together using screws (not shown) through various holes around their peripheries such as holes 18 and 28. The upper and lower housings are formed of a plastics material such as ABS, and support an axle and brush arrangement 30 in between them.

The upper housing 20 has an aperture 25 extending through the housing, for receiving a teat of an animal into the device 1. The tip of the teat is moved vertically downward relative to the device in direction 26, passing through the aperture 25 and into a cavity inside of the device. The length of the teat and the length of the cavity are both aligned with direction 26. The axle and brush arrangement 30 is beneath the aperture 25, and comprises three axles 33 that are arranged in a horizontal plane and angled at 60 degrees relative to one another along a triangular path around the cavity. Each axle rotates about its own axis 33c in directions indicated by the arrows 50, and the axes 33c are perpendicular to the length direction 26 of the cavity. Each axle 33 has two bevel gears 32 at opposing ends of the axle, for meshing with the bevel gears of the other two axles. Each axle has brush paddles 38 fitted over it, which rotate with the axle when the axle is rotated.

The lower housing 10 has three gear bays 12 for receiving the intermeshing bevel gears 32 where the ends of immediately adjacent axles meet one another. Each end of each axle 33 is received in a cradle 14 and a cradle 16, with the bevel gear 32 being held between the cradle 14 and cradle 16. The upper housing 20 has corresponding cradles 24 so that when the upper and lower housings are screwed together the axles are fully supported.

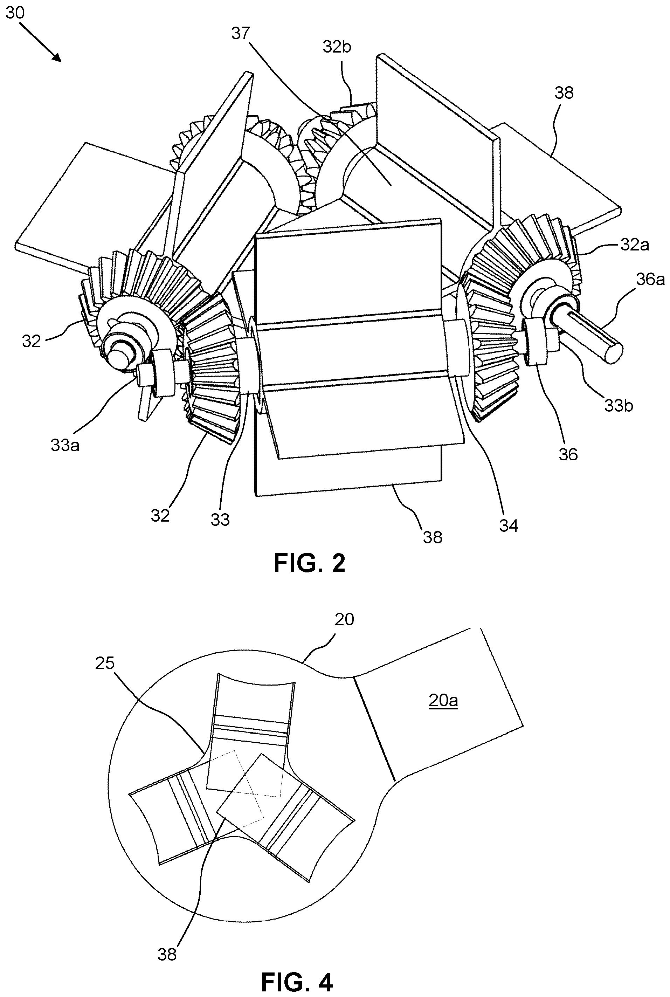

One of the axles 33 has an extended end portion 36a, which extends through the cradle 16a, and into a drive bay 19. In this embodiment, the extended end portion 36a is fitted with an additional bevel gear (not shown), and this meshes with a drive shaft from a motor in a separate part of the housing 20a (see Fig. 4).

The schematic diagram of Fig. 2 shows the axle and brush arrangement 30 in isolation from the rest of the device, and it can be seen that each axle 33 has a first end 33a and a second end 33b, with the brush paddles 38 intermediate of those ends. Each end is provided with a collar 36, for fitting into the corresponding cradle 16 of the lower housing 10 and for preventing the axle from moving longitudinally along its axis, so the bevel gears mesh correctly with one another.

Each brush has a root portion 37 which is slid over the axle 33, and four paddles 38 which extend radially from the root portion at regular 90-degree angles to one another. Each paddle is in the shape of a rectangular plate that extends along the length of the axle and radially away from the axle. The root portion 37 and paddle portions 38 of each brush are integrally formed from a silicone rubber material, and so are soft enough to resile against the teat of an animal when the teat is placed in the cavity, defined between the axles 33. Each bevel gear comprises a collar 34 which fits in the corresponding cradle 14 of the lower housing and cradle 24 of the upper housing. The bevel gears are slid onto the axle 33 until the collars 34 abut against the root portion 37 of the brush, with the brush located between the bevel gears 32.

As shown, the bevel gears 32 mesh with one another, so that a rotational force applied to the extended end portion 36a will be transmitted to the other axles. Since the axle having the extended end portion 36a has two bevel gears 32a and 32b intermeshing with the two respective other axles, there is less force transmitted by the bevel gear 32b than what there would be if the bevel gear 32a was absent, and this helps the axle and brush arrangement 30 run more smoothly and last for longer.

The brushes of each axle 33 are set at fixed rotational angles to one another, to prevent paddles 38 of differing axles from colliding with one another when the axles are rotated. The bevel gears keep the axles and brushes at fixed phases of rotation with respect to one another. For example, a first one of the brushes may be 30 degrees of rotation ahead of a second one of the axles, and a third one of the axles may be 60 degrees of rotation ahead of the first one of the axles. So, with three axles each having four paddles, one paddle strokes lengthwise along the teat for every 30 degree rotation of the extended end portion 36a. Since only one paddle is strongly pushing against the teat at any one time, the teat moves back and forth as it is impacted by the various paddles on different sides of the teat, helping to dislodge dirt and debris. Clearly, more/less paddles and axles could be used in alternate embodiments, however the use of three axles with four paddles each has been found to provide efficient cleaning of teats without the paddles interfering with one another or excessively squeezing the teat.

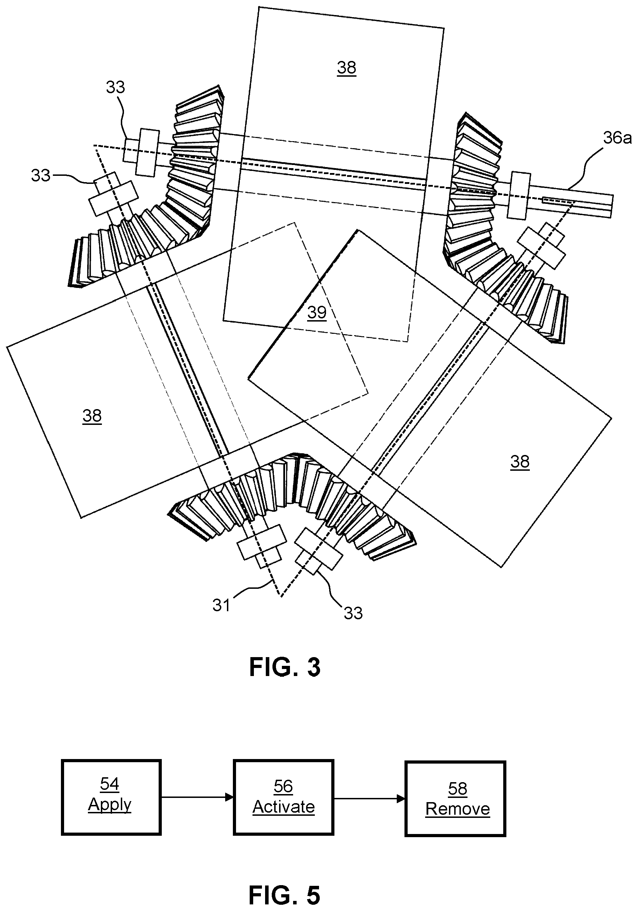

Fig. 3 shows a schematic plan diagram of the axle and brush arrangement 30, where the triangular shape of the path 31 around the cavity can be seen. The teat enters and is drawn into the cavity at the region 39 that is centrally between the axles 33, and the overlap of the paddles 38 in the region 39 can also be appreciated from Fig 3. In use, the length of the teat extends perpendicular to the plane of the page on which Fig. 3 is drawn, downwards through region 39. The paddles move downward through region 39 as the extended end portion 36a is rotated, flexing against the teat, and rubbing dirt and/or debris downwardly off the end of the teat.

The schematic diagram of Fig. 4 shows a plan view of the whole device, including the handle portion 20a which houses the motor for driving the extended end portion 36a. The aperture 25 in the upper housing 20 is visible, with the paddles 38 being beneath the aperture 25 and the cavity defined between the axles 33. The handle portion 20a also houses a reservoir for cleaning fluid, which can be injected into the region of the paddles 39 through an inlet (not shown in figs). It is also possible to add cleaning fluid through the top of the upper housing via aperture 25, if desired.

The flow diagram of Fig. 5 shows a method for using the device 1 to clean a teat of an animal prior to milking. In a first step 54, the device 1 is applied to the teat of the animal by moving the device upwardly towards the udder of the animal with the teat entering the aperture 25. In a second step 56, the device is activated by starting the motor, causing the axles and brushes to rotate. This draws the teat further into the cavity of the device, centering the teat at the region 39, centrally of the axles 33. The paddles 38 successively wipe down the teat, cleaning the teat, and cleaning fluid may be added from the reservoir in the handle 20a or through the aperture 25. Finally, the device is withdrawn from the teat in a third step 58, and may be applied to the next teat of the animal. There is no need to de-activate the device by stopping the motor before applying the device 1 to the next teat.

Many other variations of the described embodiments falling within the scope of the invention defined by the appended claims will also be apparent to those skilled in the art.

## Claims

1. A teat cleaning device (1), comprising a cavity (26, 39) for receiving a teat of an animal with a length of the teat aligned along a length of the cavity, wherein the device comprises three axles (33), each axle having an axis of rotation (33c) that is perpendicular to the length of the cavity, wherein each one of the three axles (33c) forms a respective part of a path (31) extending around the cavity, and wherein each axle (33) supports a brush (38) configured to rub against the teat of the animal when the teat is received in the cavity (26, 39) and the axle is rotated, **characterized in that** the axes of rotation (33c) of the axles are not aligned with one another and are non-parallel to one another.

2. The teat cleaning device of claim 1, wherein the thee axles (33) consist of first, second, and third axles, wherein each axle (33) comprises a first end (33a) and a second end (33b) opposite from the first end, and wherein the second end (33b) of the first axle is configured to drive the first end (33a) of the second axle to rotate.

3. The teat cleaning device of claim 2, wherein the second end (33b) of the first axle is provided with a toothed wheel (32), wherein the first end (33a) of the second axle is provided with a toothed wheel (32), and wherein the toothed wheels mesh with one another to drive the second axle to rotate when the first axle is rotated.

4. The teat cleaning device of claim 3, wherein at least one of the toothed wheels is a bevel gear (32).

5. The teat cleaning device of claim 2, 3, or 4, wherein the second end (33b) of the second axle is configured to drive the first end (33a) of the third axle to rotate, preferably in a same way as the second end of the first axle is configured to drive the first end of the second axle to rotate.

6. The teat cleaning device of claim 5, wherein the path (31) is in the shape of a triangle enclosing around the cavity (39), with each side of the triangle defined by a respective one of the three axles (33).

7. The teat cleaning device of claim 6, wherein the second end (33b) of the third axle is configured to drive the first end (33a) of the first axle to rotate, preferably in a same way as the second end of the first axle is configured to drive the first end of the second axle to rotate.

8. The teat cleaning device of claim 5, comprising at least one further axle having an axis of rotation that is perpendicular to the length of the cavity (39), wherein each further axle forms a respective part of the path extending around the cavity, and supports a brush (38) configured to rub against the teat of the animal when the teat is received in the cavity and the axle is rotated, wherein each further axle comprises a first end and a second end opposite from the first end, and the first end of the further axle is driven to rotate by rotational force transmitted via at least the first, second, and third axles.

9. The teat cleaning device of any preceding claim, wherein the path (31) is in the shape of a regular polygon, each side of the polygon defined by a respective one of the axles (33).

10. The teat cleaning device of any preceding claim, further comprising a motor that is configured to drive the first end (33a) of the first axle to rotate, via at least one of gears and pulleys.

11. The teat cleaning device of any preceding claim, wherein the brush supported by each axle comprises a plurality of paddles (38), each paddle (38) being a plate that extends along the length of the axle (33) and radially outward from the axle (33).

12. The teat cleaning device of claim 11, wherein each paddle (38) is configured to resile against the teat in the cavity and therefore rub down an arc portion of the circumference around the teat as the corresponding axle (33) is rotated.

13. The teat cleaning device of claim 11 or 12, wherein the paddles (38) of the axles fully encircle around the cavity (39), and wherein the paddles of immediately adjacent axles (33) extend from those axles at different radial angles from one another to avoid collisions between the paddles of the immediately adjacent axles.

14. The teat cleaning device of any preceding claim, wherein the axes of rotation (33c) of the axles are all in a single plane.

15. A method of cleaning a teat of an animal prior to milking the animal, the method comprising:
inserting (54) the teat into a cavity (26, 39) of a teat cleaning device (1) with a length of the teat aligned along a length of the cavity, wherein the device comprises three axles (33), each axle having an axis of rotation (33c) that is perpendicular to the length of the cavity, wherein each one of the three axles (33) forms a respective part of a path (31) extending around the cavity, wherein each axle (33) supports a brush (38) configured to rub against the teat of the animal when the teat is received in the cavity and the axle is rotated, and wherein the axes of rotation (33c) of the axles are not aligned with one another and are non-parallel to one another, and
activating (56) the teat cleaning device (1) to rotate the axles (33) and rub debris from the teats with the brushes.

## Patentansprüche

1. Zitzenreinigungsvorrichtung (1), umfassend einen Hohlraum (26, 39) zur Aufnahme einer Zitze eines Tieres, bei dem die Länge der Zitze entlang der Länge des Hohlraums ausgerichtet ist, wobei die Vorrichtung drei Achsen (33) umfasst, wobei jede Achse eine Drehachse (33c) aufweist, die senkrecht zur Länge des Hohlraums steht, wobei jede der drei Achsen (33c) einen jeweiligen Teil eines Pfades (31) bildet, der sich um den Hohlraum herum erstreckt, und wobei jede Achse (33) eine Bürste (38) trägt, die so ausgebildet ist, dass sie gegen die Zitze des Tieres reibt, wenn die Zitze in dem Hohlraum (26, 39) aufgenommen wird und die Achse gedreht wird,
**dadurch gekennzeichnet, dass**
die Drehachsen (33c) der Achsen nicht miteinander ausgerichtet und nicht parallel zueinander sind.

2. Zitzenreinigungsvorrichtung nach Anspruch 1, wobei die drei Achsen (33) aus einer ersten, einer zweiten und einer dritten Achse bestehen, wobei jede Achse (33) ein erstes Ende (33a) und ein dem ersten Ende gegenüberliegendes zweites Ende (33b) aufweist, und wobei das zweite Ende (33b) der ersten Achse so ausgebildet ist, dass es das erste Ende (33a) der zweiten Achse in Drehung versetzt.

3. Zitzenreinigungsvorrichtung nach Anspruch 2, wobei das zweite Ende (33b) der ersten Achse mit einem Zahnrad (32) versehen ist, wobei das erste Ende (33a) der zweiten Achse mit einem Zahnrad (32) versehen ist und wobei die Zahnräder miteinander kämmen, um die zweite Achse in Drehung zu versetzen, wenn die erste Achse gedreht wird.

4. Zitzenreinigungsvorrichtung nach Anspruch 3, wobei mindestens eines der Zahnräder ein Kegelrad (32) ist.

5. Zitzenreinigungsvorrichtung nach Anspruch 2, 3 oder 4, wobei das zweite Ende (33b) der zweiten Achse so ausgebildet ist, dass es das erste Ende (33a) der dritten Achse in Drehung versetzt, vorzugsweise auf die gleiche Weise, wie das zweite Ende der ersten Achse so ausgebildet ist, dass es das erste Ende der zweiten Achse in Drehung versetzt.

6. Zitzenreinigungsvorrichtung nach Anspruch 5, wobei der Pfad (31) die Form eines Dreiecks hat, das den Hohlraum (39) umschließt, bei dem jede Seite des Dreiecks durch jeweils eine der drei Achsen (33) definiert ist.

7. Zitzenreinigungsvorrichtung nach Anspruch 6, wobei das zweite Ende (33b) der dritten Achse so ausgebildet ist, dass es das erste Ende (33a) der ersten Achse in Drehung versetzt, vorzugsweise auf die gleiche Weise, wie das zweite Ende der ersten Achse so ausgebildet ist, dass es das erste Ende der zweiten Achse in Drehung versetzt.

8. Zitzenreinigungsvorrichtung nach Anspruch 5, umfassend mindestens eine weitere Achse mit einer Drehachse, die senkrecht zur Länge des Hohlraums (39) steht, wobei jede weitere Achse einen jeweiligen Teil des um den Hohlraum verlaufenden Pfades bildet und eine Bürste (38) trägt, die so ausgebildet ist, dass sie gegen die Zitze des Tieres reibt, wenn die Zitze in den Hohlraum aufgenommen wird und die Achse gedreht wird, wobei jede weitere Achse ein erstes Ende und ein dem ersten Ende gegenüberliegendes zweites Ende aufweist und das erste Ende der weiteren Achse durch eine über mindestens die erste, zweite und dritte Achse übertragene Drehkraft in Drehung versetzt wird.

9. Zitzenreinigungsvorrichtung nach einem der vorhergehenden Ansprüche, wobei der Pfad (31) die Form eines regelmäßigen Polygons hat, bei dem jede Seite des Polygons durch eine jeweilige der Achsen (33) definiert ist.

10. Zitzenreinigungsvorrichtung nach einem der vorhergehenden Ansprüche, die ferner einen Motor umfasst, der so ausgebildet ist, dass er das erste Ende (33a) der ersten Achse über mindestens eines von Zahnrädern und Riemenscheiben in Drehung versetzt.

11. Zitzenreinigungsvorrichtung nach einem der vorhergehenden Ansprüche, wobei die von jeder Achse getragene Bürste eine Vielzahl von Paddeln (38) umfasst, wobei jedes Paddel (38) eine Platte ist, die sich entlang der Länge der Achse (33) und radial nach außen von der Achse (33) erstreckt.

12. Zitzenreinigungsvorrichtung nach Anspruch 11, wobei jedes Paddel (38) so ausgebildet ist, dass es gegen die Zitze in der Kavität zurückfedert und somit einen Bogenabschnitt des Umfangs um die Zitze herum abreibt, wenn die entsprechende Achse (33) gedreht wird.

13. Zitzenreinigungsvorrichtung nach Anspruch 11 oder 12, wobei die Paddel (38) der Achsen den Hohlraum (39) vollständig umgeben und wobei sich die Paddel unmittelbar benachbarter Achsen (33) von diesen Achsen in unterschiedlichen Radialwinkeln zueinander erstrecken, um Kollisionen zwischen den Paddeln der unmittelbar benachbarten Achsen zu vermeiden.

14. Zitzenreinigungsvorrichtung nach einem der vorhergehenden Ansprüche, wobei die Drehachsen (33c) der Achsen alle in einer einzigen Ebene liegen.

15. Verfahren zum Reinigen einer Zitze eines Tieres vor dem Melken des Tieres, wobei das Verfahren umfasst:
Einführen (54) der Zitze in einen Hohlraum (26, 39) einer Zitzenreinigungsvorrichtung (1), wobei die Länge der Zitze entlang der Länge des Hohlraums ausgerichtet ist, wobei die Vorrichtung drei Achsen (33) umfasst, wobei jede Achse eine Drehachse (33c) aufweist, die senkrecht zur Länge des Hohlraums steht, wobei jede der drei Achsen (33) einen jeweiligen Teil eines Pfades (31) bildet, der sich um den Hohlraum erstreckt, wobei jede Achse (33) eine Bürste (38) trägt, die so ausgebildet ist, dass sie gegen die Zitze des Tieres reibt, wenn die Zitze in dem Hohlraum aufgenommen wird und die Achse gedreht wird, und wobei die Drehachsen (33c) der Achsen nicht miteinander ausgerichtet und nicht parallel zueinander sind, und
Aktivieren (56) der Zitzenreinigungsvorrichtung (1), um die Achsen (33) zu drehen und mit den Bürsten Verunreinigungen von den Zitzen abzureiben.

## Revendications

1. Dispositif de nettoyage de trayon (1) comprenant une cavité (26, 39) pour recevoir un trayon d'un animal avec une longueur du trayon alignée le long d'une longueur de la cavité, dans lequel le dispositif comprend trois essieux (33), chaque essieu ayant un axe de rotation (33c) qui est perpendiculaire à la longueur de la cavité, dans lequel chacun des trois essieux (33c) forme une partie respective d'un chemin (31) s'étendant autour de la cavité, et dans lequel chaque essieu (33) supporte une brosse (38) configurée pour frotter contre le trayon de l'animal lorsque le trayon est reçu dans la cavité (26, 39) et que l'essieu tourne, **caractérisé en ce que** :
les axes de rotation (33c) des essieux ne sont pas alignés entre eux et ne sont pas parallèles entre eux.

2. Dispositif de nettoyage de trayon selon la revendication 1, dans lequel les trois essieux (33) se composent de premier, deuxième et troisième essieux, dans lequel chaque essieu (33) comprend une première extrémité (33a) et une seconde extrémité (33b) opposée à la première extrémité, et dans lequel la seconde extrémité (33b) du premier essieu est configurée pour entraîner la première extrémité (33a) du deuxième essieu à tourner.

3. Dispositif de nettoyage de trayon selon la revendication 2, dans lequel la seconde extrémité (33b) du premier essieu est prévue avec une roue dentée (32), dans lequel la première extrémité (33a) du deuxième essieu est prévue avec une roue dentée (32), et dans lequel les roues dentées s'engrènent entre elles afin d'entraîner le deuxième essieu à tourner lorsque le premier essieu tourne.

4. Dispositif de nettoyage de trayon selon la revendication 3, dans lequel au moins l'une des roues dentées est un engrenage conique (32).

5. Dispositif de nettoyage de trayon selon la revendication 2, 3 ou 4, dans lequel la seconde extrémité (33b) du deuxième essieu est configurée pour entraîner la première extrémité (33a) du troisième essieu à tourner, de préférence de la même manière que la seconde extrémité du premier essieu est configurée pour entraîner la première extrémité du deuxième essieu à tourner.

6. Dispositif de nettoyage de trayon selon la revendication 5, dans lequel le chemin (31) se présente sous la forme d'un triangle se fermant autour de la cavité (39), avec chaque côté du triangle défini par un essieu respectif des trois essieux (33).

7. Dispositif de nettoyage de trayon selon la revendication 6, dans lequel la seconde extrémité (33b) du troisième essieu est configurée pour entraîner la première extrémité (33a) du premier essieu à tourner, de préférence de la même manière que la seconde extrémité du premier essieu est configurée pour entraîner la première extrémité du deuxième essieu à tourner.

8. Dispositif de nettoyage de trayon selon la revendication 5, comprenant au moins un essieu supplémentaire ayant un axe de rotation qui est perpendiculaire à la longueur de la cavité (39), dans lequel chaque essieu supplémentaire forme une partie respective du chemin s'étendant autour de la cavité et supporte une brosse (38) configurée pour frotter contre le trayon de l'animal, lorsque le trayon est reçu dans la cavité et que l'essieu tourne, dans lequel chaque essieu supplémentaire comprend une première extrémité et une seconde extrémité opposée à la première extrémité, et la première extrémité de l'essieu supplémentaire est entraînée à tourner par la force de rotation transmise via au moins les premier, deuxième et troisième essieux.

9. Dispositif de nettoyage de trayon selon l'une quelconque des revendications précédentes, dans lequel le chemin (31) se présente sous la forme d'un polygone régulier, chaque côté du polygone étant défini par un essieu respectif des essieux (33).

10. Dispositif de nettoyage de trayon selon l'une quelconque des revendications précédentes, comprenant en outre un moteur qui est configuré pour entraîner la première extrémité (33a) du premier essieu à tourner, via au moins l'un parmi des engrenages et des poulies.

11. Dispositif de nettoyage de trayon selon l'une quelconque des revendications précédentes, dans lequel la brosse supportée par chaque essieu comprend une pluralité de palettes (38), chaque palette (38) étant une plaque qui s'étend le long de la longueur de l'essieu (33) et radialement vers l'extérieur de l'essieu (33).

12. Dispositif de nettoyage de trayon selon la revendication 11, dans lequel chaque palette (38) est configurée pour reculer contre le trayon dans la cavité et par conséquent frotter une partie arquée de la circonférence autour du trayon lorsque l'essieu (33) correspondant tourne.

13. Dispositif de nettoyage de trayon selon la revendication 11 ou 12, dans lequel les palettes (38) des essieux encerclent complètement la cavité (39) et dans lequel les palettes des essieux (33) immédiatement adjacents s'étendent à partir de ces essieux à différents angles radiaux les uns par rapport aux autres afin d'éviter les collisions entre les palettes des essieux immédiatement adjacents.

14. Dispositif de nettoyage de trayon selon l'une quelconque des revendications précédentes, dans lequel les axes de rotation (33c) des essieux sont tous dans un seul plan.

15. Procédé pour nettoyer un trayon d'un animal avant de traire l'animal, le procédé comprenant les étapes consistant à :
insérer (54) le trayon dans une cavité (26, 39) d'un dispositif de nettoyage de trayon (1) avec une longueur du trayon alignée le long d'une longueur de la cavité, dans lequel le dispositif comprend trois essieux (33), chaque essieu ayant un axe de rotation (33c) qui est perpendiculaire à la longueur de la cavité, dans lequel chacun des trois essieux (33) forme une partie respective d'un chemin (31) s'étendant autour de la cavité, dans lequel chaque essieu (33) supporte une brosse (38) configurée pour frotter contre le trayon de l'animal, lorsque le trayon est reçu dans la cavité et que l'essieu tourne, et dans lequel les axes de rotation (33c) des essieux ne sont pas alignés entre eux et ne sont pas parallèles entre eux, et
activer (56) le dispositif de nettoyage de trayon (1) pour faire tourner les essieux (33) et frotter les débris des trayons avec les brosses.
